# EUROPÄISCHE PATENTSCHRIFT

(11) **EP 2 242 920 B1**
(45) Veröffentlichungstag und Bekanntmachung des Hinweises auf die Patenterteilung: **14.10.2015**
(21) Anmeldenummer: 09712888.8
(22) Anmeldetag: 26.01.2009
(51) Int. Cl.: F02D 41/00, F02D 41/02

(54) **VERFAHREN ZUR STEUERUNG DER DRUCKLUFTVERSORGUNG EINER BRENNKRAFTMASCHINE UND EINES GETRIEBES**
METHOD FOR CONTROLLING THE COMPRESSED AIR SUPPLY OF AN INTERNAL COMBUSTION ENGINE AND A TRANSMISSION
PROCÉDÉ DE COMMANDE DE L'ALIMENTATION EN AIR COMPRIMÉ D'UN MOTEUR À COMBUSTION INTERNE ET D'UNE TRANSMISSION

(30) Priorität: 18.02.2008 DE 102008000324
(43) Veröffentlichungstag der Anmeldung: 27.10.2010
(73) Patentinhaber: ZF Friedrichshafen AG, 88038 Friedrichshafen (DE)
(72) Erfinder: RÜCHARDT, Christoph, 88131 Bodolz (DE); JÄGER, Thomas, 88074 Meckenbeuren (DE); MAIR, Roland, 88069 Tettnang-Laimnau (DE)
(86) Internationale Anmeldenummer: PCT/EP2009/050822
(87) Internationale Veröffentlichungsnummer: WO 2009/103588

(56) Entgegenhaltungen:
- EP-A2- 1 316 447
- WO-A1-2005/064134
- WO-A1-2006/089779
- DE-C1- 3 906 312
- GB-A- 2 422 872

## Beschreibung

Die Erfindung betrifft ein Verfahren zum Betreiben eines Fahrzeugantriebsstranges mit einer Brennkraftmaschine, mit einem dieser Brennkraftmaschine zugeordneten Turbolader, mit einer Einrichtung zum Einblasen von zusätzlicher Druckluft in einen Luftansaugtrakt der Brennkraftmaschine sowie mit einem Getriebe gemäß dem Oberbegriff des Patentanspruchs 1.

Beispielsweise aus den Patentanmeldungen WO 2006/037564 A1, WO 2006/089779 A1 und WO 2006/089780 A1 ist es bekannt, dass eine mit einem Turbolader ausgestattete Kolbenbrennkraftmaschine in ihrem unteren Drehzahlbereich ein vergleichsweise geringes Drehmoment abgibt, da die von einem konventionellen Turboauflader zur Drehmomenterhöhung in den Einsaugtrakt des Motors gelieferte Luftmenge systembedingt von demjenigen Abgasstrom der Brennkraftmaschine abhängt, welcher die Turbine des Turboladers antreibt. Dieses als Turboloch bekannte Phänomen kann hinsichtlich seiner Ausprägung von Turboladern mit variabler Geometrie abgemildert werden, bei denen die Turbinenschaufeln in Abhängigkeit vom zur Verfügung stehenden antreibenden Abgasstrom verstellbar ausgebildet sind. Da Turbolader mit variabler Geometrie vergleichsweise teuer in der Herstellung sowie nur mit komplexen Steuerungs- und Regelungsverfahren ansteuerbar sind, besteht in der Kraftfahrzeugindustrie ein Bedarf, mit einfacheren Einrichtungen und/oder Verfahren auch bei niedrigen Motordrehzahlen ein relativ hohes Antriebsdrehmoment der Brennkraftmaschine zu erzielen.

Vor diesem Hintergrund ist aus der DE-PS-39 06 312 sowie aus der DE 199 44 946 A1 jeweils eine Methode und eine Einrichtung zur Verkleinerung des genannten Turbolochs bekannt, bei denen während der Beschleunigung eines mit einem Turbolader ausgestatteten Dieselmotors aus einem Druckluftspeicher eine bestimmte Luftmenge in das Saugrohr des Motors eingeblasen und die Kraftstoff-Einspritzmenge dementsprechend angepasst wird. Die für den Motor benötigte Druckluft kann dabei aus einem Druckluftspeicher eines Druckluftbremssystems des Fahrzeugs entnommen werden.

Aus den eingangs genannten Druckschriften WO 2006/089779 A1 und WO 2006/089780 A1 ist es zudem bekannt, zur Verkleinerung des erwähnten Turbolochs bei einer turboaufgeladenen Brennkraftmaschine eine gesonderte Einrichtung zur Frischluft- bzw. Druckluftversorgung zu verwenden. Diese im Ansaugbereich der Brennkraftmaschine angeordnete Einrichtung verfügt über einen Luftansaugtrakt als Saugrohr, der eine verstellbare Drosselklappe und einen ersten Endanschluss zur Einströmung der Ansaugluft sowie einen zweiten Endanschluss zur Ausströmung in Richtung zu den Zylindern des Motors aufweist. Die Drosselklappe ist zum Verstellen an eine von einem Steuergerät ansteuerbare Verstellvorrichtung angekoppelt. Zwischen der Drosselklappe und dem zweiten Endanschluss ist ein Druckluftanschluss mit einer Öffnung ausgebildet, die in den rohrartigen Innenraum der Einrichtung mündet. Weiter ist vorgesehen, dass der Druckluftanschluss mit einer ein Ventil mit einer gesperrten und beliebig geöffneten Stellungen aufweisenden Druckluft-Mengenregelvorrichtung zusammenwirkt, die über einen elektrischen Eingang von einem elektrischen Steuergerät ansteuerbar ist. Die Verstellvorrichtung der Drosselklappe ist von der Mengenregelvorrichtung und/oder dem Steuergerät derart zwangsbetätigt, dass zu einer voll geöffneten Stellung der Drosselklappe eine voll gesperrte Stellung der Mengenregelvorrichtung zugeordnet ist.

Zur Steuerung dieser aus der WO 2006/089779 A1 und der WO 2006/089780 A1 bekannten Einrichtungen zur Drucklufteindüsung in den Ansaugtrakt der Brennkraftmaschine nutzt das Steuergerät Drehmomentanforderungssignale, die von dem Fahrpedal, einer Antriebsschlupfregelung, einer Geschwindigkeitsregeleinrichtung und/oder einem elektrischen Stabilisationsprogramm stammen, oder von Mitteln, welche dem Motorsteuersystem eine externe Drehmomentanforderung zuleiten.

Außerdem ist es aus der WO 2006/089779 A1 bekannt, dass bei der optimalen Steuerung der Einrichtung zur Versorgung der turboaufgeladenen Brennkraftmaschine mit Druckluft - oder wie dort formuliert mit Frischgas - das Steuerungsprogramm des Steuergerätes dieser Einrichtung vorbestimmte Angaben über die Bedingungen kennt, ab wann eine Lufteinblasung durchgeführt oder beendet werden soll. So kann beispielsweise berücksichtigt sein, dass berufliche Fernfahrer oder Autobusfahrer jeweils individuelle Fahrweisen haben, die durchschnittliche Beschleunigungswerte verlangen. So kann ein solcher Fahrer bestimmte Schaltpunkte beim Schalten des Getriebes bevorzugen. Diese können von dem genannten Steuergerät festgestellt, gespeichert und ausgearbeitet werden. Diese Daten werden von dem Steuergerät beispielsweise für die Bestimmung der Dauer der Drucklufteinblasung und für die Betätigung der Drosselklappe verwendet. Durch diese Vorgehensweise soll verhindert werden, dass der Druckluftverbrauch unnötig sowie unvorteilhaft hoch ist. Insbesondere ist hierbei vorgesehen, dass die Dauer der Drucklufteinblasung und Drosselklappenbetätigung von der Häufigkeit des Fahrerwunsches für eine Beschleunigung adaptiv von der Steuerungssoftware geregelt wird.

Weiter ist aus der WO 2006/037564 A1 eine gattungsgemäße Einrichtung bekannt, bei der die aus einem Druckluftspeicher entnommene Druckluft auch unmittelbar vor das Einlassventil eines Zylinders der Brennkraftmaschine zugeführt werden kann.

Da das Zusammenwirken einer gattungsgemäßen Einrichtung zur Versorgung einer turboaufgeladenen Brennkraftmaschine mit Druckluft gemäß der WO 2006/089779 A1 und der WO 2006/089780 A1 mit anderen Einrichtungen im Fahrzeugantriebsstrang recht komplex ist, bedarf es zur optimalen Verwendung einer solchen Einrichtung in einem Kraftfahrzeug, ob nun Nutzfahrzeug oder Personenfahrzeug, spezieller Steuerungsverfahren, welche die jeweiligen Eigenarten sowie Anforderungen auch dieser Antriebstrangkomponenten berücksichtigen. Der Erfindung liegt daher die Aufgabe zugrunde, ein Verfahren vorzustellen, welches das Zusammenwirken einer Einrichtung zur Versorgung einer mit einem Turbolader ausgestatteten Brennkraftmaschine mit zusätzlicher Druckluft mit einer anderen Antriebsstrangkomponente steuert.

Die Lösung dieser Aufgabe ergibt sich aus den Merkmalen des Hauptanspruchs, während vorteilhafte Weiterbildungen und Ausgestaltungen des Verfahrens gemäß der Erfindung den Unteransprüchen entnehmbar sind.

Der Erfindung liegt die Erkenntnis zugrunde, dass es zur optimalen Steuerung einer an sich bekannten Einrichtung zur Versorgung einer turboaufgeladenen Brennkraftmaschine mit zusätzlicher Druckluft notwendig ist, auch das Betriebsverhalten anderer in einem Fahrzeugantriebstrang vorhandener Einrichtungen und/oder Aggregate mit zu berücksichtigen. Die vorliegende Erfindung beschäftigt sich daher mit dem betriebsoptimalen Zusammenwirken eines Getriebes mit einer Einrichtung zur Versorgung einer turboaufgeladenen Brennkraftmaschine mit Druckluft.

Unter dem Begriff "Getriebe" werden alle Arten von Getrieben verstanden, also beispielsweise Handschaltgetriebe, automatisierte Schaltgetriebe, Lastschaltgetriebe, Doppelkupplungsgetriebe, Stufenautomatgetriebe und auch stufenlos schaltende Getriebe.

Unter dem Begriff "Einrichtung zum Einblasen von zusätzlicher Druckluft in einen Luftansaugtrakt der Brennkraftmaschine" werden die eingangs geschilderten Einrichtungen verstanden, unabhängig davon, ob die Druckluft bzw. das Frischgas aus einem Druckluftbehälter eines Druckluftbremssystems oder einer anderen Fahrzeugeinrichtung entnommen wird, oder ob die Druckluft bedarfsgerecht unmittelbar von einer elektromotorisch betrieben Luftpumpe erzeugt wird. Die genannte Einrichtung umfasst alle zu deren Betrieb notwendigen Bauteile und Aggregate.

Zudem ist die Erfindung für alle Einrichtungen zur Versorgung der turboaufgeladenen Brennkraftmaschine mit Druckluft geeignet, unabhängig davon, ob die Druckluft weit vor den Zylindern der Brennkraftmaschine in deren Einsaugtrakt eingeblasen wird, oder ob diese unmittelbar vor dem Einlassventil eines solchen Zylinders in den Einlassbereich desselben eingedüst wird.

Die Erfindung geht daher aus von einem Verfahren zum Betreiben eines Fahrzeugantriebsstranges mit einer Brennkraftmaschine, mit einem dieser Brennkraftmaschine zugeordneten Turbolader, mit einer Einrichtung zum Einblasen von zusätzlicher Druckluft in einen Luftansaugtrakt der Brennkraftmaschine sowie mit einem Getriebe. Gemäß der Erfindung ist bei diesem Verfahren vorgesehen, dass der Zeitpunkt, die Dauer, der Druck und/oder das Volumen der in den Luftansaugtrakt der Brennkraftmaschine einzublasenden zusätzlichen Druckluft in Abhängigkeit von dem Leistungswunsch des Fahrers, der aktuellen Drehzahl der Brennkraftmaschine, dem Lastzustand der Brennkraftmaschine, der Fahrzeuggeschwindigkeit und von den Abläufen zur Übersetzungsänderung des Getriebes gesteuert wird. Lastzustände der Brennkraftmaschine umfassen Betriebszustände der Brennkraftmaschine im Zug- und Schubbetrieb.

Eine Einrichtung zur Versorgung einer mit einem Abgasturbolader ausgestatteten Brennkraftmaschine mit zusätzlicher Druckluft ermöglicht bei der Leistungssteuerung einer Brennkraftmaschine bekanntermaßen viele Vorteile. Ein derart ausgestattetes Fahrzeug lässt sich in der Praxis aber nur dann sinnvoll betreiben, wenn auf die Eigenarten des im jeweiligen Fahrzeugantriebsstrang verbauten Getriebes sowie dessen Übersetzungsänderungstätigkeit Rücksicht genommen wird. Diese Übersetzungsänderungstätigkeit ist üblicherweise das Wechseln von Getriebegängen oder das Schalten desselben in seine Neutralstellung. Bei stufenlos ihre Übersetzung ändernden Getrieben werden hierunter das Verlassen einer bisherigen Übersetzungseinstellung und das Erreichen einer neuen Getriebeübersetzung verstanden.

Dadurch, dass gemäß der Erfindung bei Abläufen zur Übersetzungsänderung des Getriebes der Zeitpunkt, die Dauer, der Druck und/oder das Volumen der in den Luftansaugtrakt der Brennkraftmaschine einzublasenden zusätzlichen Druckluft in Abhängigkeit von dem Leistungswunsch des Fahrers, der aktuellen Drehzahl der Brennkraftmaschine, dem Lastzustand der Brennkraftmaschine und der Fahrzeuggeschwindigkeit berücksichtigt werden, wird erreicht, dass insbesondere bei geringen Drehzahlen der Brennkraftmaschine eine durch die zusätzliche Drucklufteinblasung erzeugte Drehmomenterhöhung derselben sinnvoll für die Abläufe im Getriebe genutzt werden kann. Die erzielbaren Vorteile im Zusammenspiel des Getriebes, der Brennkraftmaschine und der Einrichtung zum Einblasen von zusätzlicher Druckluft betreffen vor allem die Steigerung der Geschwindigkeit und des Komforts von Übersetzungsänderungsvorgängen bzw. Schaltungen des Getriebes, wie nachfolgend anhand von Weiterbildungen der Erfindung ausgeführt wird.

Gemäß einer ersten vorteilhaften Ausgestaltung des Verfahrens gemäß der Erfindung ist bei einem Fahrzeugantriebsstrang mit einem elektronischen Steuergerät zur Steuerung der Brennkraftmaschine, mit einem elektronischen Steuergerät zur Steuerung der Einrichtung zum Einblasen von zusätzlicher Druckluft in den Ansaugtrakt der Brennkraftmaschine sowie mit einem elektronischen Steuergerät zur Steuerung des Getriebes (oder eines gemeinsamen elektronischen Steuergeräts zur Steuerung aller oder einiger dieser Antriebsstrangkomponenten) vorgesehen, dass das elektronische Steuergerät zur Steuerung der Einrichtung zum Einblasen von zusätzlicher Druckluft ständig eine aktuelle Information darüber ermittelt und anderen Steuerungen bzw. Steuergeräten bereitstellt, über welchen Zeitraum und mit welchem Druck bzw. Volumenstrom Druckluft in den Ansaugtrakt eingeblasen werden kann.

Diese Informationen sind mittels Sensoren an einem Druckluftbehälter von dem Steuergerät ermittelbar, wobei dieser Druckluftbehälter ein solcher sein kann, der zusätzlich auch von einem Druckluftbremssystem des Fahrzeugs, beispielsweise eines Nutzfahrzeugs, verwendet wird. Die Bereitstellung der genannten Informationen erfolgt bevorzugt über ein elektronisches Fahrzeugdatennetz, beispielsweise über einen an sich bekannten CAN-Bus. Dadurch können auch andere Steuerungen bzw. andere Steuergeräte des Fahrzeugs die genannten Informationen erlangen, die letztlich eine Aussage darüber gestatten, wann und über welchen Zeitraum sowie in welcher Höhe eine Drehmomentsteigerung der Brennkraftmaschine durch ein Einblasen zusätzlicher Druckluft möglich ist.

Gemäß einer anderen Weiterbildung der Erfindung ist vorgesehen, dass es das Getriebesteuergerät, welches die Information, über welchen Zeitraum und mit welchem Druck bzw. Volumenstrom Druckluft in den Ansaugtrakt eingeblasen werden kann, mit Hilfe geeigneter Sensoren ermittelt, und zur Auswahl des Zielgangs einer Zug-Hochschaltung oder einer Zug-Rückschaltung sowie zur optimalen Durchführung einer solchen Übersetzungsänderung nutzt.

In diesem Zusammenhang kann vorgesehen sein, dass dem Getriebesteuergerät der aktuelle Befüllgrad und der aktuelle Druck im Druckluftbehälter der Einrichtung zum Einblasen von zusätzlicher Druckluft mitgeteilt wird, dass aus diesen Information abgeleitet wird, über welchen Zeitraum und mit welchem Druck bzw. Volumenstrom zusätzliche Druckluft in den Ansaugtrakt eingeblasen werden kann, und dass diese Informationen zur Bestimmung der Zielübersetzung bzw. Zielgangbestimmung des Getriebes genutzt werden.

Eine andere Weiterbildung der Erfindung sieht vor, dass das elektronische Steuergerät zur Steuerung der Einrichtung zum Einblasen von zusätzlicher Druckluft zur Berechnung des aktuell maximal möglichen Motordrehmoments den Einfluss einer aktuell hinsichtlich Druck und Dauer möglichen Drucklufteinblasung berücksichtigt und den Wert des aktuell maximal möglichen Motordrehmoments bei einer Drucklufteinblasung dem Getriebesteuergerät zur Planung und Durchführung von Übersetzungsänderungsvorgängen zur Verfügung stellt.

Außerdem kann bei dem Zusammenspiel des Getriebesteuergeräts und dem Steuergerät der Drucklufteinblaseinrichtung vorgesehen sein, dass das Getriebesteuergerät ermittelt, ob im Zusammenhang mit der Vorbereitung oder der optimalen Durchführung einer Übersetzungsänderung des Getriebes ein Einblasen von zusätzlicher Druckluft in den Ansaugtrakt der Brennkraftmaschine überhaupt sinnvoll ist, und dass es bei einer positiven Beurteilung einen Befehl zur Drucklufteinblasung hinsichtlich des Zeitpunktes, des Drucks und der Dauer der Drucklufteinblasung an das Steuergerät der Einblaseinrichtung abgibt.

Eine weitere Ausgestaltung sieht vor, dass der Befehl zum Einblasen von zusätzlicher Druckluft in den Ansaugtrakt dann erteilt wird, wenn das nach einer geplanten Übersetzungsänderung des Getriebes erreichbare Motordrehmoment ohne eine Drucklufteinblasung nicht ausreichend wäre, um das Fahrzeug in der Zielübersetzung ausreichend beschleunigen zu können.

Außerdem kann vorgesehen sein, dass das Getriebesteuergerät diejenigen Getriebeübersetzungen bzw. Gänge bestimmt, die ohne und mit einer Drucklufteinblasung bei der aktuellen Betriebssituation der Brennkraftmaschine und des Fahrzeugs sinnvoll einstellbar sind, und dass das Getriebesteuergerät diejenige Übersetzung bzw. denjenigen Gang als Zielübersetzung auswählt, die bei Nutzung einer Drucklufteinblasung unter Kraftstoffverbrauchs- oder Leistungskriterien die optimale Anschlussübersetzung des Getriebes darstellt.

Weiter wird es als vorteilhaft beurteilt, wenn vorgesehen ist, dass das Getriebesteuergerät während einer Übersetzungsänderung das Steuergerät zur Steuerung der Einrichtung zum Einblasen von zusätzlicher Druckluft derartig befehligt, dass unter Berücksichtigung des dynamischen Verhaltens dieser Drucklufteinblaseinrichtung und der Brennkraftmaschine die Brennkraftmaschine nach der Übersetzungsänderung möglichst schnell ihr maximal verfügbares Drehmoment zur Verfügung stellt.

Weiter ist es vorteilhaft, wenn vorgesehen ist, dass die Einrichtung zum Einblasen von Druckluft bei Rückschaltungen derart frühzeitig angesteuert wird, dass, sobald das Getriebe in Neutral geschaltet ist, die Brennkraftmaschine ein ausreichend hohes Drehmoment zur Verfügung stellt, um damit die Anschlussdrehzahl für die Zielübersetzung bzw. den Zielgang so schnell wie möglich erreichen zu können.

Zudem ist es sinnvoll vorzusehen, dass die Einrichtung zum Einblasen von Druckluft bei Rückschaltungen derart frühzeitig angesteuert wird, dass sobald im Getriebe die Zielübersetzung eingestellt bzw. der Zielgang eingelegt ist, ein derart hohes Motordrehmoment zur Verfügung steht, dass ein gewünschtes Beschleunigungsverhalten des Fahrzeugs erreicht wird.

Um ein Kraftstoff sparendes oder leistungsorientiertes Fahren eines derart ausgestatteten Fahrzeugs zu ermöglichen ist vorgesehen, dass die Einrichtung zum Einblasen von Druckluft bei Rückschaltungen derart angesteuert wird, dass ein gezieltes Anheben des Motor-Anschlussdrehmoments nach Abschluss der Schaltung vorliegt, um einen Zugkrafteinbruch zu minimieren und einen höheren Anschlussgang zu ermöglichen, um bei vergleichsweise niedrigen Motordrehzahlen ein Kraftstoff sparendes Fahren zu ermöglichen.

Gemäß einer anderen Weiterbildung des Verfahrens gemäß der Erfindung ist vorgesehen, dass bei einem Hochschaltvorgang zur Reduzierung der zugkraftfreien bzw. zugkraftreduzierten Phase einer Übersetzungsänderung des Getriebes und zur Steigerung der gefühlten Schaltgeschwindigkeit von dem Getriebesteuergerät unmittelbar nach dem Ende des Hochschaltvorgangs ein Befehl zum Einblasen von zusätzlicher Druckluft in den Ansaugtrakt der Brennkraftmaschine an das Steuergerät der Einblaseinrichtung abgegeben wird.

Schließlich ist es für den Betrieb eines Fahrzeugs im Schubbetrieb bei einem Fahrbahngefälle in Fahrtrichtung sinnvoll, wenn in der Steuerung vorgesehen ist, dass ein in den Fahrzeugantriebsstrang einkuppelbarer und von der Brennkraftmaschine antreibbarer Druckluftkompressor zum Befüllen des genannten Druckluftbehälters zur Erhöhung der Bremswirkung des Fahrzeugantriebsstranges dann betätigt bzw. eingekuppelt wird, wenn das Getriebesteuergerät eine Schub-Rückschaltung des Getriebes aktiviert hat.

Schließlich ist es für den Betrieb eines Fahrzeugs im Schubbetrieb bei einem Fahrbahngefälle in Fahrtrichtung sinnvoll, wenn in der Steuerung vorgesehen ist, dass ein in den Fahrzeugantriebsstrang einkuppelbarer und von der Brennkraftmaschine antreibbarer Druckluftkompressor zum Befüllen des genannten Druckluftbehälters dann präventiv betätigt bzw. eingekuppelt wird, wenn sich das Fahrzeug vorzugsweise im Schubbetrieb befindet, damit die Bremswirkung erhöht sowie der Kraftstoffverbrauch weiter optimiert werden.

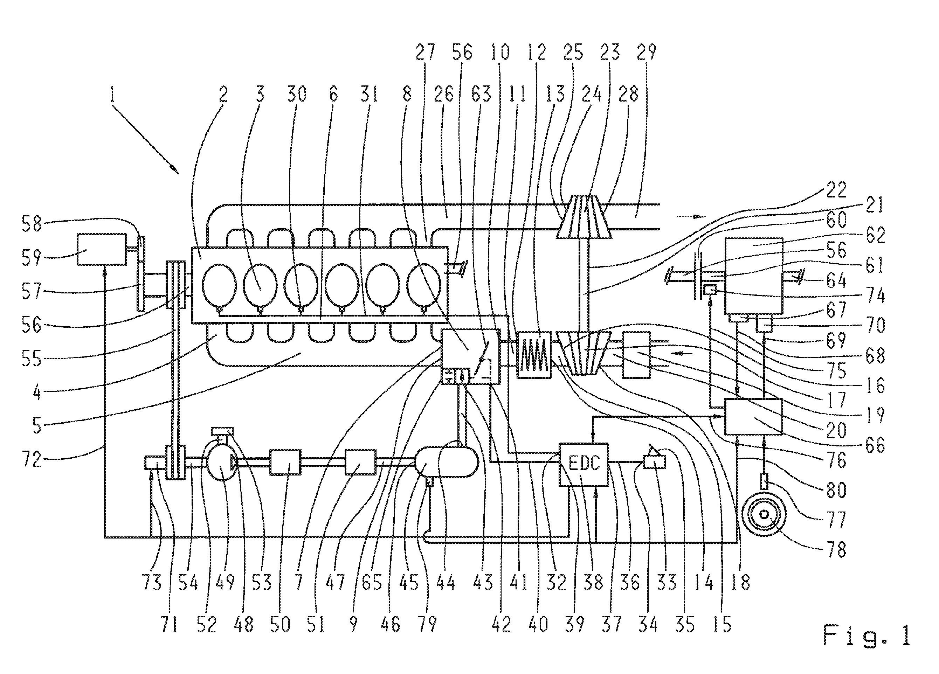

Die Erfindung wird nachfolgend ausführlich anhand eines in der einzigen Zeichnungsfigur dargestellten Ausführungsbeispiels erläutert. In dieser Figur ist schematisch ein wesentlicher Teil eines an sich bekannten Fahrzeugantriebsstrangs 1 dargestellt. Zu dem Antriebsstrang 1 gehört ein mit einem Turbokompressor 17 ausgestatteter Dieselmotor 2 mit sechs in einer Reihe im Zylinderblock 6 angeordneten Zylindern 3. Die Saugleitungen 4 der Zylinder 3 sind an einer Sammelleitung 5 angeschlossen, welche einen Anschlussflansch 7 aufweist, woran ein Luftansaugtrakt 8 mit seinem zweiten Endanschluss 9 zum Ausströmen von Luft angeschlossen ist. Der erste Endanschluss 10 zum Einströmen von Luft ist durch eine Leitung 11 mit der Ausströmöffnung 12 eines Ladeluftkühlers 13 gekoppelt, deren Einströmöffnung 14 durch eine Leitung 15 mit der Ausströmöffnung 16 des Turbokompressors 17 gekoppelt ist. An die Einströmöffnung 18 des Turbokompressors 17 ist ein Luftfilter 19 mit einer Leitung 20 angeschlossen. Der Turbokompressor 17 bildet einen Teil des Turboladers 22, deren Abgasturbine 23 mit seiner Einströmöffnung 24 an die Ausströmöffnung 25 des Auspuffsammelrohrs 26 angeschlossen ist. Der Turbokompressor 17 und die Abgasturbine 23 sind an einer drehbar gelagerten Welle 21 befestigt. Die Zylinder 3 sind durch Auspuffleitungen 27 an das Auspuffsammelrohr 26 angeschlossen und die Ausströmöffnung 28 der Abgasturbine 23 ist mit dem Abgasrohr 29 strömungswirksam verbunden.

Die Kraftstoffversorgung der Zylinder 3 erfolgt über Einspritzdüsen 30, deren Regelung durch die Leitung 31 vom ersten Ausgang 32 der elektronischen Steuereinheit (EDC) 38 durchgeführt wird. An den Eingang 37 der elektronischen Steuereinheit 38 ist der Ausgang 34 der elektronischen Steuereinheit 33 durch die Leitung 36 angeschlossen. Diese zuletzt genannte Steuereinheit 33 ist mit einem Betätigungsorgan versehen, das in diesem Ausführungsbeispiel als Fahrpedal 35 ausgebildet ist. Der elektrische Anschluss 39 der elektronischen Steuereinheit 38 ist durch die Sammelleitung 40 mit dem elektrischen Anschluss 41 des Luftansaugtrakts 8 gekoppelt. Die gestrichelte Steuerleitung an dem Luftansaugtrakt 8 verdeutlicht, dass die elektronische Steuereinheit 38 einen nicht dargestellten Stellmotor zur Betätigung der Drosselklappe 63 ansteuert. Mit dieser Drosselklappe 63 ist die von dem Dieselmotor 2 ansaugbare Luftmenge einstellbar.

Der Luftansaugtrakt 8 besitzt einen Druckluftanschluss 42, der durch die Leitung 43 an den Auslassanschluss 44 eines Druckluftbehälters 45 angeschlossen ist. Der Speiseanschluss 46 des Druckluftbehälters 45 ist durch die Leitung 47 an den Druckluftanschluss 48 eines Druckluftkompressors 49 angeschlossen. In die Leitung 47 sind auch ein Druckregler 50 und ein Lufttrockner 51 eingebaut. Der Druckluftkompressor 49 besitzt einen Saugstutzen 52, der mit einem Luftfilter 53 versehen ist. Die Welle 54 des Druckluftkompressors 49 ist durch einen Riemenantrieb 55 mit der Hauptwelle 56 des turboaufgeladenen Dieselmotors 2 verbunden. Die Erfindung erfasst aber auch solche Druckluftkompressoren, die von einem durch beispielsweise die elektronische Steuereinheit 38 ansteuerbare Elektromotor angetrieben werden (nicht dargestellt).

Weiter zeigt die Figur, dass der Druckluftkompressor 49 über eine von dem genannten elektronischen Steuergerät 38 über eine Steuerleitung 73 ansteuerbare Kupplung 71 mit dem Riementrieb 55 an der Brennkraftmaschine 2 verbindbar ist, so dass dieser Druckluftkompressor 49 nur dann von dem Steuergerät 38 aktiviert wird, wenn der Druck im Druckluftbehälter 45 aufgefüllt werden muss. Zur Ermittlung des aktuellen Drucks in dem Druckbehälter 45 ist dort ein Drucksensor 79 angeordnet, dessen Messsignal über eine Sensorleitung 80 an das Steuergerät 38 und/oder an das Getriebesteuergerät 66 leitbar ist.

Die Aktivierung des Druckluftkompressors 49 erfolgt gemäß der Erfindung beispielsweise dann sehr vorteilhaft, wenn sich das Fahrzeug im Schubbetrieb an einem Hang befindet, um durch die Leistungsaufnahme des Druckluftkompressors 49 die Bremswirkung des Antriebsstrangs 1 zu nutzen.

Weiter zeigt die einzige Zeichnungsfigur, dass die Brennkraftmaschine 2 von einem elektromotorischen Anlasser 59 antreibbar und damit startbar ist, der mit seinem Ritzel 58 in einen Zahnkranz 57 der Schwungscheibe der Brennkraftmaschine 2 eingreifen kann. Die Schwungscheibe ist mit dem Zahnkranz 57 in bekannter Weise an der Hauptwelle 56 der Brennkraftmaschine 2 befestigt. Der Anlasser 59 ist über eine Steuerleitung 72 mit dem elektronischen Steuergerät 38 der Einblaseinrichtung für zusätzliche Druckluft verbunden und durch dieses Steuergerät 38 daher ein- und ausschaltbar.

Außerdem ist ein von der elektronischen Steuereinheit 38 ansteuerbares elektromagnetisches Steuer- und Regelventil 65 in der Leitung 43 angeordnet, mit dem ein Eindüsen oder Einblasen von zusätzlicher Druckluft aus dem Druckluftbehälter 45 in den Luftansaugtrakt 8 möglich ist, wenn dies zur Beeinflussung, insbesondere zur Anhebung des Drehmoments des Dieselmotors 2 sinnvoll erscheint. Das Steuerventil 65 wird von dem elektronischen Steuergerät 38 über die Sammelleitung 40 angesteuert, die sich im Bereich des Luftansaugtraktes 8 in eine Steuerleitung (klein gestrichelt gezeichnet) zur Ansteuerung des Stellmotors der Drosselklappe 63 und in eine Steuerleitung (groß gestrichelt gezeichnet) zur Ansteuerung des Steuerventils 63 aufzweigt.

Außerdem zeigt die Figur schematisch, dass die Brennkraftmaschine 2 abtriebsseitig über deren Hauptwelle 56 mit der Eingangsseite einer Anfahrund Schaltkupplung 60 drehfest verbunden ist, während die Ausgangsseite dieser Anfahrkupplung 60 mit der Getriebeeingangswelle 61 eines Automatgetriebes 62 gekoppelt ist. Die Anfahrkupplung 60 ist als eine automatisiert betätigbare Kupplung ausgebildet und daher mit einem Kupplungsaktuator 74 ausgestattet, der über eine Steuerleitung 75 mit einem Getriebesteuergerät 66 verbunden ist und von diesem befehligt wird.

Sofern es das Betriebsverhalten der dieselmotorischen Brennkraftmaschine 2 erfordert, kann eingangsseitig vor der Anfahrkupplung 60 auch noch ein hier nicht dargestellter Drehschwingungsdämpfer angeordnet sein, welches jedoch an sich bekannt ist. Das Automatgetriebe 62 verfügt über eine Ausgangswelle, die über nicht gezeigte Antriebswellen und ein Differentialgetriebe mit den Fahrzeugrädern 78 verbunden ist.

Das Automatgetriebe 62 ist im vorliegenden Ausführungsbeispiel als automatisiertes Schaltgetriebe ausgebildet, dessen bekannte Gangaktuatoren 70 über Steuerleitungen 69 mit dem Getriebesteuergerät 66 verbunden sind. Mit Hilfe dieser Gangaktuatoren 70 können in bekannter Weise Getriebegänge einund ausgelegt bzw. ganz allgemein Übersetzungsänderungen durchgeführt werden. Das Getriebesteuergerät 66 ist zudem über Sensorleitungen 68 mit Sensoren am Getriebe 66 verbunden, mittels denen das Getriebesteuergerät 62 schaltrelevante Informationen ermittelt. Bei solchen Informationen handelt es sich zunächst um die Drehzahlen der Getriebeeingangswelle 61 und der Getriebeausgangswelle 64 sowie um Weg- und/oder Positionssignale der Gangaktuatoren 70. Außerdem wird von dem Getriebesteuergerät 66 und/oder dem Steuergerät 38 mit Hilfe eines Drehzahlsensors 77 an der Getriebeabtriebswelle 64 oder einem Fahrzeugrad 78 die Fahrzeuggeschwindigkeit sowie mit einem nicht dargestellten Drehzahlsensor an der Hauptwelle 56 der Brennkraftmaschine 2 die Motordrehzahl ermittelt. Auf der Grundlage dieser sowie anderer Informationen werden die Vorgänge zur Übersetzungsänderung im Automatgetriebe 62 vorbereitet und durchgeführt.

Der Antriebsstrang 1 funktioniert hinsichtlich der Basisfunktionen der Einrichtung 8 zur Frischluftversorgung des Dieselmotors 2 zunächst wie folgt:
Die Zylinder 3 des turboaufgeladenen Dieselmotors 2 werden mit Frischgas durch die Saugleitungen 4, die Sammelleitung 5, den Luftansaugtrakt 8, die Leitung 11, den Ladeluftkühler 13, die Leitung 15, den Turbokompressor 17 und den Luftfilter 19 gespeist, wenn die Motordrehzahl konstant ist. Die Abgase verlassen die Zylinder 3 durch die Auspuffleitungen 27, das Auspuffsammelrohr 26, die Abgasturbine 23 und das Abgasrohr 29.

Wenn der Fahrer das Fahrpedal 35 schnell nieder drückt, damit das Motordrehmoment bzw. die Motordrehzahl rasch erhöht werden soll, benötigt der Dieselmotor 2 mehr Kraftstoff und mehr Frischgas bzw. Luft als kurz zuvor. Der zusätzliche Kraftstoff wird in die Zylinder 3 geführt, aber die Erhöhung der Frischgasmenge, die vom Turbolader 22 geliefert wird, bleibt unzureichend. Zudem ist bei geringen Motordrehzahlen der Druck des Frischgases im Ansaugtrakt 8 niedrig, der im Innenraum ständig durch einen nicht dargestellten Drucksensor ermittelt und zur elektronischen Steuereinheit 38 geleitet wird. In diesem Betriebszustand ist die Drosselklappe 63 voll geöffnet. Die elektronische Steuereinheit 38 stellt sodann mit Hilfe eines Steuerungsprogramms fest, dass sich der Druck im Innenraum des Luftansaugtrakts 8 nicht genügend schnell erhöht und eine zusätzliche Lufteinblasung durchgeführt werden soll.

Das Steuerungsprogramm hat vorbestimmte Angaben über die Bedingungen, wann die zusätzliche Lufteinblasung zu beginnen hat. Zum Beginn wird die Drosselklappe 63 in Richtung Schließen verstellt und die Drucklufteinblasung durch Öffnen des Ventils 65 von dem Druckluftbehälter 45 in den Luftansaugtrakt 8 frei gegeben. Die Dauer der Lufteinblasung wird ebenfalls vom Steuerungsprogramm vorgegeben, das die Druckdifferenz und den absoluten Druck in dem Luftansaugtrakt 8 berücksichtigt.

Durch das Steuerungsprogramm soll zunächst verhindert werden, dass der Druckluftverbrauch vom Druckluftbehälter 45 so hoch ist, dass die Bremssicherheit eines an den Druckluftbehälter 45 angeschlossenen Druckluftbremssystems negativ beeinflusst wird.

Weiter ist in der Figur erkennbar, dass das Getriebesteuergerät 66 über eine Datenleitung 76 eines CAN-Bus-Systems mit dem Steuergerät 38 der Einrichtung zum Einblasen von zusätzlicher Druckluft verbunden ist, wobei letzteres auch als Motorsteuergerät bezeichnet werden kann. Zwischen diesen beide Steuergeräten 38, 66 findet gemäß der Erfindung ständig ein Informationsaustausch darüber statt, ob und wenn ja wann sowie in welchem Umfang ein Einblasen von zusätzlicher Druckluft in den Ansaugtrakt 8 der Brennkraftmaschine 2 zur Anhebung des Motordrehmoments und zur Unterstützung einer Getriebeschaltung erfolgen kann und/oder erfolgen soll.

Erst durch diesen Informationsaustausch sind die Übersetzungsänderungsvorgänge bzw. Gangschaltvorgänge im Automatgetriebe 62 sinnvoll in einem Fahrzeug durchführbar, in dem eine solche Einrichtung zum Einblasen von zusätzlicher Druckluft in den Luftansaugtrakt 8 der Brennkraftmaschine 2 implementiert ist. Zudem ermöglicht die exakte Koordinierung der Steuerung des Einblasens von zusätzlicher Druckluft in den Ansaugtrakt 8 der Brennkraftmaschine 2 zur Vorbereitung und Durchführung von Übersetzungsänderungsvorgängen im Automatgetriebe 2 sehr vorteilhaft Betriebsweisen des Fahrzeugantriebsstrangs 1, welches so bisher nicht möglich war und worauf weiter vorne bereits eingegangen wurde.

### Bezugszeichen

- 1: Fahrzeugantriebsstrang
- 2: Brennkraftmaschine, Dieselmotor
- 3: Zylinder
- 4: Saugleitung
- 5: Sammelleitung
- 6: Zylinderblock
- 7: Anschlussflansch
- 8: Luftansaugtrakt
- 9: Zweiter Endanschluss, Ausströmbereich
- 10: Erster Endanschluss, Einströmbereich
- 11: Leitung
- 12: Ausströmöffnung
- 13: Ladeluftkühler
- 14: Einströmöffnung
- 15: Leitung
- 16: Ausströmöffnung
- 17: Turbokompressor
- 18: Einströmöffnung
- 19: Luftfilter
- 20: Leitung
- 21: Welle
- 22: Turbolader
- 23: Abgasturbine
- 24: Einströmöffnung
- 25: Ausströmöffnung
- 26: Auspuffsammelrohr
- 27: Auspuffleitung
- 28: Ausströmöffnung
- 29: Abgasrohr
- 30: Einspritzdüse
- 31: Leitung
- 32: Ausgang
- 33: Steuereinheit
- 34: Ausgang
- 35: Fahrpedal
- 36: Leitung
- 37: Eingang
- 38: Elektronische Steuereinheit
- 39: Anschluss
- 40: Sammelleitung
- 41: Anschluss
- 42: Druckluftanschluss
- 43: Leitung
- 44: Auslassanschluss
- 45: Druckluftbehälter
- 46: Speiseanschluss
- 47: Leitung
- 48: Druckluftanschluss
- 49: Druckluftkompressor
- 50: Druckregler
- 51: Lufttrockner
- 52: Saugstutzen
- 53: Luftfilter
- 54: Welle
- 55: Riemenantrieb
- 56: Hauptwelle
- 57: Zahnkranz
- 58: Ritzel des Anlassers
- 59: Anlasser
- 60: Anfahr- und Schaltkupplung
- 61: Getriebeeingangswelle
- 62: Getriebe, Automatgetriebe
- 63: Drosselklappe
- 64: Getriebeausgangswelle
- 65: Steuer- und Regelventil
- 66: Getriebesteuergerät
- 67: Sensor am Getriebe
- 68: Sensorleitung
- 69: Steuerleitung zum Getriebeaktuator 70
- 70: Aktuator am Getriebe
- 71: Aktuator an der Kupplung des Druckluftkompressors
- 72: Steuerleitung zum Anlasser
- 73: Steuerleitung zum Aktuator 71
- 74: Kupplungsaktuator
- 75: Steuerleitung zum Kupplungsaktuator
- 76: Datenleitung, CAN-Bus
- 77: Drehzahlsensor
- 78: Fahrzeugrad
- 79: Drucksensor
- 80: Sensorleitung

## Patentansprüche

1. Verfahren zum Betreiben eines Fahrzeugantriebsstranges (1) mit einer Brennkraftmaschine (2), mit einem dieser Brennkraftmaschine zugeordneten Turbolader (22), mit einer Einrichtung zum Einblasen von zusätzlicher Druckluft in einen Luftansaugtrakt (8) der Brennkraftmaschine (2) sowie mit einem Getriebe (62), wobei ein Zeitpunkt, eine Dauer, ein Druck und/oder ein Volumen,der in den Luftansaugtrakt (8) der Brennkraftmaschine (2) einzublasenden zusätzlichen Druckluft in Abhängigkeit von einem Leistungswunsch des Fahrers, einer aktuellen Drehzahl der Brennkraftmaschine (2), einem Lastzustand der Brennkraftmaschine (2) und einer Fahrzeuggeschwindigkeit gesteuert wird, **dadurch gekennzeichnet, dass** der Zeitpunkt, die Dauer, der Druck und/oder das Volumen der in den Luftansaugtrakt der Brennkraftmaschine einzublasenden zusätzlichen Druckluft zusätzlich in Abhängigkeit von den Abläufen zur Übersetzungsänderung des Getriebes (62) gesteuert wird.

2. Verfahren nach Anspruch 1, wobei der Fahrzeugantriebsstrang (1) ein elektronisches Steuergerät (38) zur Steuerung der Brennkraftmaschine (2), ein elektronisches Steuergerät (38) zur Steuerung der Einrichtung zum Einblasen von zusätzlicher Druckluft sowie ein elektronisches Steuergerät (66) zur Steuerung des Getriebes (62), oder ein gemeinsames elektronisches Steuergerät zur Steuerung aller oder einiger dieser Antriebsstrangkomponenten aufweist, **dadurch gekennzeichnet, dass** das elektronische Steuergerät (38) zur Steuerung der Einrichtung zum Einblasen von zusätzlicher Druckluft ständig eine aktuelle Information darüber ermittelt und anderen Steuerungen bereitstellt, über welchen Zeitraum und mit welchem Druck bzw. Volumenstrom Druckluft in den Ansaugtrakt (8) eingeblasen werden kann.

3. Verfahren nach Anspruch 1 oder 2, dadurch **gekennzeich**n e t, dass das Getriebesteuergerät (66) die Information, über welchen Zeitraum und mit welchem Druck bzw. Volumenstrom zusätzliche Druckluft in den Ansaugtrakt (8) eingeblasen werden kann, zur Auswahl des Zielgangs einer Zug-Hochschaltung oder Zug-Rückschaltung sowie zur optimalen Durchführung der Übersetzungsänderung nutzt.

4. Verfahren nach einem der vorherigen Ansprüche, **dadurch gekennzeichnet, dass** dem Getriebesteuergerät (66) der aktuelle Befüllgrad und der aktuelle Druck im Druckluftbehälter (45) der Einrichtung zum Einblasen von zusätzlicher Druckluft mitgeteilt wird, dass aus diesen Informationen abgeleitet wird, über welchen Zeitraum und mit welchem Druck bzw. Volumenstrom zusätzliche Druckluft in den Ansaugtrakt (8) eingeblasen werden kann, und dass diese Informationen zur Bestimmung der Zielübersetzung bzw. Zielgangbestimmung genutzt werden.

5. Verfahren nach einem der vorherigen Ansprüche, **dadurch gekennzeichnet, dass** das elektronische Steuergerät (38) zur Steuerung der Einrichtung zum Einblasen von zusätzlicher Druckluft zur Berechnung des aktuell maximal möglichen Motordrehmoments den Einfluss einer aktuell hinsichtlich Druck und Dauer möglichen Drucklufteinblasung berücksichtigt und den Wert des aktuell maximal möglichen Motordrehmoments bei einer Drucklufteinblasung dem Getriebesteuergerät (66) zur Planung und Durchführung von Übersetzungsänderungsvorgängen zur Verfügung stellt.

6. Verfahren nach einem der vorherigen Ansprüche, **dadurch gekennzeichnet, dass** das Getriebesteuergerät (66) ermittelt, ob im Zusammenhang mit der Vorbereitung oder der optimalen Durchführung einer Übersetzungsänderung des Getriebes (62) ein Einblasen von zusätzlicher Druckluft in den Ansaugtrakt (8) der Brennkraftmaschine (2) sinnvoll ist, und dass es bei einer positiven Beurteilung einen Befehl zur Drucklufteinblasung hinsichtlich des Zeitpunktes, des Drucks und der Dauer der Drucklufteinblasung an das Steuergerät (38) der Einblaseinrichtung abgibt.

7. Verfahren nach einem der vorherigen Ansprüche, **dadurch gekennzeichnet, dass** der Befehl zum Einblasen von zusätzlicher Druckluft in den Ansaugtrakt (8) dann erteilt wird, wenn das nach einer geplanten Übersetzungsänderung des Getriebes (62) erreichbare Motordrehmoment ohne eine Drucklufteinblasung nicht ausreichend wäre, um das Fahrzeug in der Zielübersetzung ausreichend beschleunigen zu können.

8. Verfahren nach einem der vorherigen Ansprüche, **dadurch gekennzeichnet, dass** das Getriebesteuergerät (66) diejenigen Getriebeübersetzungen bzw. Gänge bestimmt, die ohne und mit einer Drucklufteinblasung bei der aktuellen Betriebssituation der Brennkraftmaschine (2) und dem Fahrzeug sinnvoll einstellbar sind, und dass das Getriebesteuergerät (66) diejenige Übersetzung bzw. denjenigen Gang als Zielübersetzung auswählt, die bei Nutzung einer zusätzlichen Drucklufteinblasung unter Kraftstoffverbrauchsoder Leistungskriterien die optimale Anschlussübersetzung des Getriebes (62) darstellt.

9. Verfahren nach einem der vorherigen Ansprüche, **dadurch gekennzeichnet, dass** das Getriebesteuergerät (66) während einer Übersetzungsänderung das Steuergerät (38) zur Steuerung der Einrichtung zum Einblasen von zusätzlicher Druckluft derartig befehligt, dass unter Berücksichtigung des dynamischen Verhaltens dieser Drucklufteinblaseinrichtung und der Brennkraftmaschine (2) die Brennkraftmaschine nach der Übersetzungsänderung möglichst schnell ihr maximal verfügbares Drehmoment zur Verfügung stellt.

10. Verfahren nach einem der vorherigen Ansprüche, **dadurch gekennzeichnet, dass** die Einrichtung zum Einblasen von zusätzlicher Druckluft bei Rückschaltungen derart frühzeitig angesteuert wird, dass, sobald das Getriebe (62) in Neutral geschaltet ist, die Brennkraftmaschine (2) ein ausreichend hohes Drehmoment zur Verfügung stellt, um damit die Anschlussdrehzahl für die Zielübersetzung bzw. den Zielgang so schnell wie möglich erreichen zu können.

11. Verfahren nach einem der vorherigen Ansprüche, **dadurch gekennzeichnet, dass** die Einrichtung zum Einblasen von zusätzlicher Druckluft bei Rückschaltungen derart frühzeitig angesteuert wird, dass, sobald im Getriebe (62) die Zielübersetzung eingestellt bzw. der Zielgang eingelegt ist, ein derart hohes Motordrehmoment zur Verfügung steht, dass ein gewünschtes Beschleunigungsverhalten des Fahrzeugs erreicht wird.

12. Verfahren nach einem der vorherigen Ansprüche, **dadurch gekennzeichnet, dass** die Einrichtung zum Einblasen von zusätzlicher Druckluft bei Rückschaltungen derart angesteuert wird, dass ein gezieltes Anheben des Motor-Anschlussdrehmoments nach Abschluss der Schaltung vorliegt, um einen Zugkrafteinbruch zu minimieren und einen höheren Anschlussgang zu ermöglichen, um bei niedrigen Motordrehzahlen ein Kraftstoff sparendes Fahren zu ermöglichen.

13. Verfahren nach einem der vorherigen Ansprüche, **dadurch gekennzeichnet, dass** bei einem Hochschaltvorgang zur Reduzierung der zugkraftfreien bzw. zugkraftreduzierten Phase einer Übersetzungsänderung des Getriebes (62) und zur Steigerung der gefühlten Schaltgeschwindigkeit von dem Getriebesteuergerät (66) unmittelbar nach dem Ende des Hochschaltvorgangs ein Befehl zum Einblasen von zusätzlicher Druckluft in den Ansaugtrakt (8) der Brennkraftmaschine (2) an das Steuergerät (38) der Einblaseinrichtung abgegeben wird.

14. Verfahren nach einem der vorherigen Ansprüche, **dadurch gekennzeichnet, dass** ein in den Fahrzeugantriebsstrang (1) einkuppelbarer (71) und von der Brennkraftmaschine (2) antreibbarer Druckluftkompressor (49) zum Befüllen des Druckluftbehälters (45) zur Erhöhung der Bremswirkung des Fahrzeugantriebsstranges (1) dann betätigt bzw. eingekuppelt wird, wenn das Getriebesteuergerät (66) eine Schub-Rückschaltung des Getriebes (62) aktiviert hat.

15. Verfahren nach Anspruch 14, **dadurch gekennzeichnet, dass** bei Betrieb des Fahrzeugs im Schubbetrieb bei einem Fahrbahngefälle in Fahrtrichtung der Druckluftkompressor (49) zum Befüllen des Druckluftbehälters (45) präventiv betätigt bzw. eingekuppelt wird, damit die Bremswirkung erhöht sowie der Kraftstoffverbrauch weiter optimiert werden.

## Claims

1. Method for operating a vehicle drive train (1) having an internal combustion engine (2), having a turbocharger (2) assigned to this internal combustion engine, having a device for blowing additional compressed air into an air intake tract (8) of the internal combustion engine (2) and having a gearbox (62), wherein a point in time, a duration, a pressure and/or a volume of the additional compressed air which is to be blown into the air intake tract (8) of the internal combustion engine (2) is controlled as a function of a power request of the driver, a current rotational speed of the internal combustion engine (2), a load state of the internal combustion engine (2) and a vehicle speed, **characterized in that** the point in time, the duration, the pressure and/or the volume of the additional compressed air which is to be blown into the air intake tract of the internal combustion engine is additionally controlled as a function of the sequences for changing the transmission ratio of the gearbox (62).

2. Method according to Claim 1, wherein the vehicle drive train (1) has an electronic control unit (38) for controlling the internal combustion engine (2), an electronic control unit (38) for controlling the device for blowing in additional compressed air, and an electronic control unit (66) for controlling the gearbox (62) or a common electronic control unit for controlling all or some of these drive train components, **characterized in that** the electronic control unit (38) for controlling the device for blowing in additional compressed air continuously determines up to date information about the time period over which, and the pressure or volume flow with which, compressed air can be blown into the intake tract (8), and makes said information available to other control systems.

3. Method according to Claim 1 or 2, **characterized in that** the gearbox control unit (66) uses the information about the period of time over which, and the pressure or volume flow with which, additional compressed air can be blown into the intake track (8) to select the target gear of a traction upshift or traction downshift and for optimum execution of the change in transmission ratio.

4. Method according to one of the preceding claims, **characterized in that** the current filling level and the current pressure in the compressed air container (45) of the device for blowing in additional compressed air is communicated to the gearbox control unit (66), **in that** the period of time over which, and the pressure or volume flow with which, additional compressed air can be blown into the intake tract (8) is derived from this information, and **in that** this information is used to determine the target transmission ratio or for the determination of the target gear.

5. Method according to one of the preceding claims, **characterized in that** the electronic control device (38) for controlling the device for blowing in additional compressed air takes into account, for the calculation of the currently maximum possible engine torque, the influence of the currently possible blowing in of compressed air in terms of pressure and duration and makes available the value of the currently maximum possible engine torque during the blowing in of compressed air to the gearbox control unit (66) for the planning and execution of processes for changing the transmission ratio.

6. Method according to one of the preceding claims, **characterized in that** the gearbox control unit (66) determines whether it is appropriate to blow additional compressed air into the intake tract (8) of the internal combustion engine (2) in conjunction with the preparation or the optimum execution of a change in the transmission ratio of the gearbox (62), and **in that** in the event of a positive assessment it outputs a command for the blowing in of compressed air in terms of the point in time, the pressure and the duration of the blowing in of compressed air to the control unit (38) of the blowing in device.

7. Method according to one of the preceding claims, **characterized in that** the command to blow additional compressed air into the intake tract (8) is issued if the engine torque which can be achieved after a planned change in transmission ratio of the gearbox (62) would not be sufficient, without blowing in compressed air, to be able to accelerate the vehicle sufficiently in the target transmission ratio.

8. Method according to one of the preceding claims, **characterized in that** the gearbox control unit (66) determines those gearbox transmission ratios or gears which can be set appropriately without or with the blowing in of compressed air in the current operating situation of the internal combustion engine (2) and the vehicle, and **in that** the gearbox control unit (66) selects that transmission ratio or that gear as a target transmission ratio which represents, in terms of fuel consumption or power, the optimum connecting transmission ratio of the gearbox (62) when additional blowing in of compressed air is used.

9. Method according to one of the preceding claims, **characterized in that** during a change in the transmission ratio the gearbox control unit (66) commands the control unit (38) to control the device for blowing in additional compressed air in such a way that the internal combustion engine makes available its maximum available torque as quickly as possible after the change in transmission ratio by taking into account the dynamic behaviour of this compressed air blowing in device and of the internal combustion engine (2).

10. Method according to one of the preceding claims, **characterized in that** the device for blowing in additional compressed air in the case of downshift operations is actuated early in such a way that as soon as the gearbox (62) is shifted to neutral the internal combustion engine (2) makes available a sufficiently high torque in order to be able to reach the connecting rotational speed for the target transmission ratio or the target gear as quickly as possible.

11. Method according to one of the preceding claims, **characterized in that** the device for blowing in additional compressed air in the case of downshift operations is actuated early in such a way that as soon as the target transmission ratio is set or the target gear is engaged in the gearbox (62) an engine torque is made available which is of such a magnitude that a desired acceleration behaviour of the vehicle is achieved.

12. Method according to one of the preceding claims, **characterized in that** the device for blowing in additional compressed air in the case of downshift operations is actuated in such a way that selective raising of the engine connecting torque after the termination of the shifting operation occurs, in order to minimize a dip in the traction force and to permit a higher connection gear, in order to permit driving which is economical in terms of fuel at low engine speeds.

13. Method according to one of the preceding claims, **characterized in that** in the case of an up shift process for reducing the phase of a change in transmission ratio of the gearbox (62) which is free of traction force or has reduced traction force and in order to increase the sensed shifting speed of the gearbox control unit (66) directly after the end of the upshifting process, a command for blowing additional compressed air into the intake tract (8) of the internal combustion engine (2) is output to the control unit (38) of the blowing in device.

14. Method according to one of the preceding claims, **characterized in that** a compressed air compressor (49) which can be engaged (71) in the vehicle drive train (1) and driven by the internal combustion engine (2) and has the purpose of filling the compressed air container (45) in order to increase the braking effect of the vehicle drive train (1) is actuated and engaged when the gearbox control unit (66) has activated an overrun downshift operation of the gearbox (62).

15. Method according to Claim 14, **characterized in that** during the operation of the vehicle in the overrun mode in the case of a negative gradient of the carriageway in the direction of travel, the compressed air compressor (49) is preventively activated or engaged in order to fill the compressed air container (45), so that the braking effect is increased and the fuel consumption is optimized further.

## Revendications

1. Procédé pour faire fonctionner une chaîne cinématique de véhicule (1) comprenant un moteur à combustion interne (2), comprenant un turbocompresseur (22) associé à ce moteur à combustion interne, comprenant un dispositif destiné à insuffler de l'air comprimé supplémentaire dans une aile d'aspiration d'air (8) du moteur à combustion interne (2) et comprenant aussi une boîte de vitesses (62), un instant, une durée, une pression et/ou un volume de l'air comprimé supplémentaire à insuffler dans l'aile d'aspiration d'air (8) du moteur à combustion interne (2) étant commandés en fonction d'une demande de puissance du conducteur, d'une vitesse de rotation actuelle du moteur à combustion interne (2), d'un état de charge du moteur à combustion interne (2) et d'une vitesse du véhicule, **caractérisé en ce que** l'instant, la durée, la pression et/ou le volume de l'air comprimé supplémentaire à insuffler dans l'aile d'aspiration d'air du moteur à combustion interne sont en plus commandés en fonction des opérations de changement de démultiplication de la boîte de vitesses (62).

2. Procédé selon la revendication 1, selon lequel la chaîne cinématique de véhicule (1) possède un contrôleur électronique (38) destiné à commander le moteur à combustion interne (2), un contrôleur électronique (38) destiné à commander le dispositif destiné à insuffler de l'air comprimé supplémentaire ainsi qu'un contrôleur électronique (66) destiné à commander la boîte de vitesses (62), ou un contrôleur électronique commun destiné à commander la totalité ou certains de ces composants de la chaîne cinématique, **caractérisé en ce que** le contrôleur électronique (38) destiné à commander le dispositif destiné à insuffler de l'air comprimé supplémentaire détermine constamment et délivre à d'autres commandes une information actuelle à propos de la période pendant laquelle et de la pression avec laquelle ou du débit volumique avec lequel de l'air comprimé peut être insufflé dans l'aile d'aspiration (8).

3. Procédé selon la revendication 1 ou 2, **caractérisé en ce que** le contrôleur de boîte de vitesses (66) utilise l'information à propos de la période pendant laquelle et de la pression avec laquelle ou du débit volumique avec lequel de l'air comprimé supplémentaire peut être insufflé dans l'aile d'aspiration (8) pour sélectionner le rapport cible d'un changement à un rapport supérieur en traction ou d'un changement à un rapport inférieur en traction ainsi que pour réaliser le changement de démultiplication de manière optimale.

4. Procédé selon l'une des revendications précédentes, **caractérisé en ce que** le degré de remplissage actuel et la pression actuelle dans le réservoir à air comprimé (45) du dispositif destiné à insuffler de l'air comprimé supplémentaire sont communiqués au contrôleur de boîte de vitesses (66), **en ce que** la période pendant laquelle et la pression avec laquelle ou le débit volumique avec lequel de l'air comprimé supplémentaire peut être insufflé dans l'aile d'aspiration (8) sont dérivés de ces informations, et **en ce que** ces informations sont utilisées pour déterminer la démultiplication cible ou déterminer le rapport cible.

5. Procédé selon l'une des revendications précédentes, **caractérisé en ce que** le contrôleur électronique (38) destiné à commander le dispositif destiné à insuffler de l'air comprimé supplémentaire, pour le calcul du couple moteur actuellement maximal possible, tient compte de l'influence d'une insufflation d'air comprimé actuellement possible en termes de pression et de durée, et met la valeur du couple moteur actuellement maximal possible à disposition du contrôleur de boîte de vitesses (66) lors d'une insufflation d'air comprimé en vue de la planification et de l'exécution des opérations de changement de démultiplication.

6. Procédé selon l'une des revendications précédentes, **caractérisé en ce que** le contrôleur de boîte de vitesses (66) détermine, dans le contexte de la préparation ou de l'exécution optimale d'un changement de démultiplication de la boîte de vitesses (62), si une insufflation d'air comprimé supplémentaire dans l'aile d'aspiration (8) du moteur à combustion interne (2) est judicieuse, et **en ce qu'**en cas d'une évaluation positive, il délivre au contrôleur (38) du dispositif d'insufflation une instruction d'insufflation d'air comprimé concernant l'instant, la pression et la durée de l'insufflation d'air comprimé.

7. Procédé selon l'une des revendications précédentes, **caractérisé en ce que** l'instruction d'insufflation d'air comprimé supplémentaire dans l'aile d'aspiration (8) est communiquée lorsque le couple moteur pouvant être atteint après un changement de démultiplication planifié de la boîte de vitesses (62) ne serait pas suffisant, sans une insufflation d'air comprimé, pour pouvoir accélérer suffisamment le véhicule dans la démultiplication cible.

8. Procédé selon l'une des revendications précédentes, **caractérisé en ce que** le contrôleur de boîte de vitesses (66) détermine les démultiplications de boîte de vitesse ou les rapports qui peuvent être réglés judicieusement sans et avec une insufflation d'air comprimé en présence de la situation opérationnelle actuelle du moteur à combustion interne (2) et du véhicule, et **en ce que** le contrôleur de boîte de vitesses (66) sélectionne comme démultiplication cible la démultiplication ou le rapport qui, en cas d'utilisation d'une insufflation d'air comprimé supplémentaire, représente la démultiplication de sortie optimale de la boîte de vitesses (62) selon des critères de consommation de carburant ou de puissance.

9. Procédé selon l'une des revendications précédentes, **caractérisé en ce que** le contrôleur de boîte de vitesses (66), pendant un changement de démultiplication, instruit le contrôleur (38) destiné à commander le dispositif destiné à insuffler de l'air comprimé supplémentaire de telle sorte qu'en tenant compte du comportement dynamique de ce dispositif d'insufflation d'air comprimé et du moteur à combustion interne (2), le moteur à combustion interne met à disposition son couple maximal disponible le plus rapidement possible après le changement de démultiplication.

10. Procédé selon l'une des revendications précédentes, **caractérisé en ce que** le dispositif destiné à insuffler de l'air comprimé supplémentaire est commandé de manière anticipée lors des rétrogradations de telle sorte que dès que la boîte de vitesses (62) est amenée au point mort, le moteur à combustion interne (2) met à disposition un couple suffisamment élevé pour pouvoir atteindre ainsi le plus rapidement possible la vitesse de rotation de sortie pour la démultiplication cible ou le rapport cible.

11. Procédé selon l'une des revendications précédentes, **caractérisé en ce que** le dispositif destiné à insuffler de l'air comprimé supplémentaire est commandé de manière anticipée lors des rétrogradations de telle sorte que dès que la démultiplication cible est réglée ou que le rapport cible est engagé dans la boîte de vitesses (62), le couple moteur disponible est élevé au point qu'un régime d'accélération souhaité du véhicule est atteint.

12. Procédé selon l'une des revendications précédentes, **caractérisé en ce que** le dispositif destiné à insuffler de l'air comprimé supplémentaire est commandé lors des rétrogradations de telle sorte qu'il se produit un rehaussement ciblé du couple de sortie du moteur après la fin du changement de rapport, afin de minimiser un effondrement de la force de traction et de permettre un rapport de sortie plus élevé, ce afin de permettre une conduite économique en carburant aux faibles vitesses de rotation du moteur.

13. Procédé selon l'une des revendications précédentes, **caractérisé en ce que** lors d'une opération de changement vers un rapport supérieur, en vue de réduire la phase sans force de traction ou à force de traction réduite d'un changement de démultiplication de la boîte de vitesses (62) et en vue d'augmenter la vitesse de changement de rapport perçue, une instruction d'insufflation d'air comprimé supplémentaire dans l'aile d'aspiration (8) du moteur à combustion interne (2) est délivrée par le contrôleur de boîte de vitesses (66) au contrôleur (38) du dispositif d'insufflation immédiatement après la fin de l'opération de changement vers un rapport supérieur.

14. Procédé selon l'une des revendications précédentes, **caractérisé en ce qu'**un compresseur à air comprimé (49) destiné à remplir le réservoir à air comprimé (45), pouvant être intégré par couplage (71) dans la chaîne cinématique de véhicule (1) et pouvant être entraîné par le moteur à combustion interne (2) est actionné ou intégré par couplage en vue d'augmenter l'effet de freinage de la chaîne cinématique de véhicule (1) lorsque le contrôleur de boîte de vitesses (66) a activé une rétrogradation de décélération de la boîte de vitesses (62).

15. Procédé selon la revendication 14, **caractérisé en ce que** lors de l'utilisation du véhicule en mode décélération lors d'une pente descendante dans le sens de la marche, le compresseur à air comprimé (49) est actionné ou intégré par couplage de manière préventive pour remplir le réservoir à air comprimé (45) afin que l'effet de freinage soit augmenté et que la consommation de carburant soit optimisée davantage.
